# EUROPEAN PATENT APPLICATION

(11) **EP 1 460 858 A1**
(43) Date of publication of application: **22.09.2004**
(21) Application number: 04250328.4
(22) Date of filing: 22.01.2004
(51) Int. Cl.: H04N 13/00, G02B 27/22

(54) **Apparatus for displaying three-dimensional image**

(30) Priority: 24.01.2003 JP 2003016664
(71) Applicant: Pioneer Corporation, Tokyo-to (JP)
(72) Inventor: Chuman, Takashi, Pioneer Corporation, Tsurugashima-shi, Saitama-ken (JP); Uchida, Yoshihiko, Pioneer Corporation, Tsurugashima-shi, Saitama-ken (JP); Satoh, Hideo, Pioneer Corporation, Tsurugashima-shi, Saitama-ken (JP); Yoshizawa, Atsushi, Pioneer Corporation, Tsurugashima-shi, Saitama-ken (JP); Hata, Takuya, Pioneer Corporation, Tsurugashima-shi, Saitama-ken (JP); Yanagisawa, Shuuichi, Pioneer Corporation, Tsurugashima-shi, Saitama-ken (JP)
(74) Representative: Townsend, Victoria Jayne

(57) **Abstract**

An apparatus for displaying a three-dimensional image of an object to be displayed, through a superimposing of a plurality of images of the object, which are placed so as to be apart from each other on a line of sight of an observer, comprises: the first display unit, the second display unit and an optical transmission unit. The first display unit has the first screen. The second display unit is disposed so as to face the first display unit. The second display unit has the second screen, which is light-transmissible. The optical transmission unit is disposed between the first display unit and the second display unit, to transmit light, which is emitted from portions of the first screen, to respective portions of the second screen.

## Description

### BACKGROUND OF THE INVENTION

### Field of the Invention

The present invention relates to an image display apparatus, which is provided with a plurality of display units disposed in tandem on a line of sight of an observer and controls images displayed on the respective display units so as to provide the observer with a three-dimensional image.

### Description of the Related Art

As conventional apparatuses capable of causing images to be recognized three-dimensionally, various types of such apparatuses are proposed or commercialized. For example, as an electrically rewritable apparatus capable of displaying images three-dimensionally, a liquid crystal shutter-glasses system, etc., is well known. This liquid crystal shutter-glasses system takes pictures of a three-dimensional object using a camera from different directions, combines image data including parallax information obtained into one image signal, inputs the signal into a two-dimensional display apparatus and displays it. An observer wears liquid crystal shutter-glasses, which, for example, allow light to pass through the right eye-liquid crystal shutter and cause the left eye-liquid crystal shutter to shield light for odd fields. On the other hand, the liquid crystal shutter-glasses allow light to pass through the left eye-liquid crystal shutter and cause the right eye-liquid crystal shutter to shield light for even fields. At this time, an image for the right eye is displayed in odd fields in synchronization with an image for the left eye in even fields so that the observer watches the images including parallax between the right eye and left eye through the respective eyes, and thereby obtains a three-dimensional image.

Furthermore, there is a display apparatus, which includes a plurality of display units that are disposed in tandem in a direction of the line of sight of the observer, allows the observer to watch those images displayed overlapped and thereby recognize the overlapped image as a three-dimensional image though those images are discrete images in the depth direction. On the other hand, there is a display apparatus, which provides variations for brightness of images displayed on two-dimensional display apparatuses to eliminate the situation of those discrete images so that the observer feels as if the object exists at a midpoint of discrete positions and has more naturally a feeling in three dimensions. For example, there is a proposal of a brightness modulation type three-dimensional display system which displays images of an object from a plurality of display apparatuses overlapped with one another using a plurality of half-mirrors and allows a semi-transparent object to be displayed or allows an object behind to be seen through, as described for example in Japanese Laid-Open Patent Application No. 2000-115812.

Such a display apparatus, which includes the display units that are disposed in tandem in the direction of the line of sight of the observer, however has a technical problem that a part of light emitted from one display unit may not appropriately be transmitted to the other display unit, when the light emitted from the one display unit passes through the other display unit. More specifically, such a display apparatus involves the problem of inappropriate transmission due to light reflection in a transmission path from a pixel of the one display unit to a corresponding pixel of the other display unit. As a result, it may be difficult or impossible for an observer to recognize visually imaged displayed on the display units in an appropriately superimposed state on his/her line of sight, thus causing an additional technical problem. Failure to superimpose the images in such an appropriate manner also leads to a problem that it becomes difficult to carry out an appropriate display of the three-dimensional image, irrespective of the type of display system such as a brightness modulation type.

### SUMMARY OF THE INVENTION

An object of the present invention, which was made in view of the above-described problems, is therefore to provide a display apparatus, which permits to transmit light emitted from one of the display units so as to be recognized visually by an observer in an appropriate manner, thus enabling the observer to recognize visually the three-dimensional image.

In order to attain the aforementioned object, an apparatus according to one aspect of the present invention for displaying a three-dimensional image of an object to be displayed, through a superimposing of a plurality of images of said object, which are placed so as to be apart from each other on a line of sight of an observer, comprises:
a first display unit having a first screen;
a second display unit disposed so as to face said first display unit, said second display unit having a second screen, which is light-transmissible; and
an optical transmission unit disposed between said first display unit and said second display unit, to transmit light, which is emitted from portions of said first screen, to respective portions of said second screen.

### BRIEF DESCRIPTION OF THE DRAWINGS

FIG. 1 is a block diagram illustrating a display apparatus according to the example of the present invention;
FIG. 2 is a diagrammatic view illustrating conceptually the structure of the display unit of the display apparatus according to the example the present invention;
FIG. 3 is a diagrammatic view illustrating conceptually a conventional display apparatus, which is a comparative example to the display apparatus according to the example of the present invention;
FIGS. 4(a) and 4(b) are diagrammatic views illustrating conceptually the other structures of the display apparatus according to the example of the present invention;
FIGS. 5(a) and 5(b) are diagrammatic views illustrating conceptually a concrete example of the structure of the display apparatus according to the present invention;
FIG. 6 is a diagrammatic view illustrating conceptually another concrete example of the structure of the display apparatus according to the present invention; and
FIG. 7 is a diagrammatic view illustrating conceptually further another concrete example of the structure of the display apparatus according to the present invention.

### DETAILED DESCRIPTION OF THE PREFERRED EMBODIMENTS

Embodiments of the present invention will be described below.

An apparatus according to the embodiment of the present invention, for displaying a three-dimensional image of an object to be displayed, through a superimposing of a plurality of images of said object, which are placed so as to be apart from each other on a line of sight of an observer, comprises: a first display unit having a first screen; a second display unit disposed so as to face said first display unit, said second display unit having a second screen, which is light-transmissible; and an optical transmission unit disposed between said first display unit and said second display unit, to transmit light, which is emitted from portions of said first screen, to respective portions of said second screen.

According to the first embodiment according to the display apparatus of the present invention, superimposing an image, which is displayed on the closer side to an observer (i.e., the image displayed on the first screen) on another image, which is displayed on the further side from the observer (i.e., the image displayed on the second screen) on his/her line of sight makes it possible to provide the three-dimensional display. More specifically, the observer can recognize visually the three-dimensional image. According to a brightness modulation-type three-dimensional display system, for example, there can be provided a continuous three-dimensional display in which allocation of brightness of images of the same object, which are to be displayed on the first and second display units (which may be referred to as the "two display units"), causes an observer to recognize visually one of the images behind the other thereof. Alternatively, there can be provided a discrete three-dimensional display system in which image sections are displayed discretely on any one of the two display units. There can also be provided a continuous or discrete three-dimensional display in which an observer recognizes visually the image as if it exists in one of three or more display units.

Especially, in the present embodiment according to the display apparatus of the present invention, the optical transmission unit is configured to enable the light emitted form parts of the first screen (i.e., the light emitted from the first display unit) to be transmitted to the respective corresponding parts of the second screen. Here, the "parts" of the first and second screens in the present invention mean for example pixels. The optical transmission unit is made of transparent fiber or columnar material such as optical fibers, each of which or each bundles of which is provided for each of the pixels. Alternatively, the optical transmission unit may be made of transparent fiber or columnar material such as optical fibers, each of which is provided for a plurality of pixels (for example, two, three, four, eight or sixteen adjacent pixels).

It is therefore possible to avoid obstacles to light transmission in comparison with a case where no optical transmission unit is provided between the two display units and these units are isolated from each other by air. Accordingly, it is possible to transmit the light emitted from the first screen to the second screen through the optical transmission unit in an appropriate manner, without being influenced for example by reflection, refraction and dispersion of light due to conditions of air through which the light is to be transmitted (for example, differences in particles size of vapor or temperature). More specifically, it is possible for an observer to recognize visually the light emitted from the first screen in substantially the same state as emitted therefrom. The observer can therefore recognize visually the image displayed on the first display unit, without variation in brightness, luminosity and amount of light.

The light emitted from the parts of the first screen is transmitted through a suitable optical path, resulting in an appropriate light transmission to the corresponding parts of the second screen. More specifically, it is possible to superimpose the image displayed on the first display unit on the image displayed on the second display unit on the observer's line of sight in an appropriate manner.

Consequently, the image displayed on the first display unit can be superimposed on the corresponding image displayed on the second display unit, without variation in brightness, luminosity and amount of light on the observer's line of sight. This makes it possible for the observer to recognize visually the three-dimensional image in an appropriate manner. In addition, it is not necessary to adjust the brightness of the image to display it, in view of variation in brightness due to reflection of the light, thus making it possible to reduce load required for the image display processing. Advantageous effects can be obtained in this manner.

In addition, disposing the optical transmission unit between each pair of two adjacent display units of three or more display units of the display apparatus makes it possible to avoid obstacles to optical transmission, such as reflection, refraction and dispersion of light between each pair of two adjacent display units. It is therefore possible to display the images displayed on the respective display units in an appropriately superimposed state on an observer's line of sight, without variation in brightness, luminosity and amount of light, in the same manner as the display apparatus according to the above-described embodiment of the present invention.

In the embodiment of the present invention, disposing the optical transmission unit between the first and second display units also in any other suitable three-dimensional display system than the brightness modulation type thee-dimensional display system can also provide the same technical effects as described above.

In addition, in such an embodiment in which the optical transmission unit is disposed between the first and second display units, cost required to align these two display units each other can be remarkably reduced. According to the prior art, a large-scaled apparatus has been required to align the two display units. In the embodiment according to the display apparatus of the present invention, it is however possible to make relatively easily align the two display units each other merely by disposing the optical transmission unit between the two display units with the use for example of an optical microscope. This eliminates the need for a complicated manufacturing step such as a step for aligning the display units utilizing a large-scaled apparatus, with the result that simplification of the manufacturing line and reduction of manufacturing costs can be achieved to provide the display apparatus at low cost, thus causing great advantageous effects in practice. In addition, simplification of the structure itself of the display apparatus leads to simplification of the manufacturing steps, so as to be adapted to mass production of the display apparatus, thus causing great advantageous effects in practice.

In one of modes of the embodiment of the display apparatus according to the present invention, the first display unit may comprise: a first substrate; and a first luminescent layer formed on the first substrate, the first luminescent layer emitting light so as to provide the first screen; and the second display unit may comprise: a second substrate having a light transmission property; and a second luminescent layer formed on the second substrate, the second luminescent layer emitting light so as to provide the second screen.

In such a mode, it is possible to achieve the embodiment according to the display apparatus of the present invention with the use of a display device such as an organic electroluminescence display device, which includes a substrate and an organic electroluminescence layer formed on the substrate so as to server as the luminescent layer. The term "electroluminescence" may be hereinafter referred to as "EL".

The second substrate having the light transmission property contains for example glass or plastic component. Accordingly, the second display unit having the light transmission property can be provided. It is therefore possible for an observer to recognize visually the image displayed on the second luminescent layer and the image displayed on the first luminescent layer in a superimposed state on his/her line of sight. The first substrate may have the light transmission property or may not have it.

In this case, the optical transmission unit may be disposed between the first substrate and the second substrate, between the first luminescent layer and the second luminescent layer, between the first substrate and the second luminescent layer or between the second substrate and the second luminescent layer. In either case, light emitted from the parts of the first screen can be appropriately transmitted to the corresponding parts of the second screen.

In addition, each of the first substrate and the second substrate may have a function of lens, or a function of transformation for various kinds of images, such as a color transformation function. More specifically, each of the first substrate and the second substrate may include for example a lens array, or a color conversion filter. When the image displayed on the first or second display unit (i.e., a bunch of light emitted from the first or second luminescent layer) is recognized visually through the substrate having the above-mentioned functions, it is possible to achieve relatively easily various modes of the image display in place of or in addition to the image display according to the normal image processing carried out by means of a microcomputer.

In the mode of the display apparatus in which the display unit comprises the substrate and the luminescent layer, the optical transmission unit may be disposed between the first display unit and an opposite surface of the second substrate to the second luminescent layer.

In the three-dimensional display system utilizing the plurality of display units, stereognostic visual sense, which is found by an observer, depends on the distance between the display units (i.e., the distance between the luminescent layers of the display units). In other words, there is a suitable distance between the display units to provide the appropriate three-dimensional display.

According to this mode, it is possible to display the images for three-dimensional display on the first screen and the second screen (i.e., the first luminescent layer and the second luminescent layer), which are placed apart from each other by the distance corresponding to the total amount of the thickness of the second substrate and the length of the light transmission path. Determining the predetermined thickness of the second substrate or determining the predetermined length of the optical transmission path of the optical transmission unit in addition to or in place of the above-mentioned predetermined thickness of the second substrate enables the first display unit and the second display unit to be disposed so as to be apart from each other by the desired distance, which is suitable for the three-dimensional display.

It is therefore possible to display appropriately the images for the three-dimensional display so as to be apart from each other by the predetermined distance, which is suitable for the three-dimensional display, thus enabling an observer to recognize visually the three-dimensional image in an appropriate manner.

Alternatively, in the case of the display apparatus provided with three or more display units, determining the predetermined thickness of each of the display units or adjusting the length of the optical transmission path of the optical transmission unit, which is disposed between each pair of two adjacent display units in addition to or in place of the above-mentioned predetermined thickness of each of the display units enables the images for the three-dimensional display to be displayed appropriately so as to be apart from each other by the predetermined distance, which is suitable for the three-dimensional display.

In the other mode than the above-mentioned, it is possible for an observer to recognize visually the three-dimensional image by disposing the optical transmission unit so that the images displayed on the first display unit and the second display unit are apart from each other by the predetermined distance, which is suitable for the three-dimensional display and transmitting light through such an optical transmission unit.

In the mode of the display apparatus in which the optical transmission unit is disposed between the first display unit and the opposite surface of the second substrate to the second luminescent layer, the first substrate may have a light transmission property; and the optical transmission unit may be is disposed between the second display unit and an opposite surface of the first substrate to the first luminescent layer.

Such a structure enables the images for the three-dimensional display to be displayed on the first screen and the second screen (i.e., the first luminescent layer and the second luminescent layer) so as to be apart from each other by the distance corresponding to the total amount of the thickness of the first substrate and the second substrate and the length of the optical transmission path of the optical transmission unit. More specifically, determining the predetermined thickness of each of the first and second display units or adjusting the length of the optical transmission path of the optical transmission unit in addition to or in place of the above-mentioned predetermined thickness of each of the display units enables the images for the three-dimensional display to be displayed appropriately so as to be apart from each other by the predetermined distance, which is suitable for the three-dimensional display.

In a structure in which an optical path is provided between the first substrate and the second substrate, using optical fibers as the optical transmission unit enables the optical fibers to be relatively easily connected to the substrate, thus providing advantageous effects. More specifically, it become possible to achieve relatively easily the embodiment of the display apparatus according to the present invention merely by connecting the optical fibers to the surface of the substrate for example through an optical adhesive.

In the mode of the display apparatus in which the display unit comprises the substrate and the luminescent layer as described above, the optical transmission unit may have the same refractive index as that of the first substrate.

Such a structure makes it possible to prevent effectively reflection of light, which may be caused by difference between the refractive index of the optical transmission unit and the refractive index of the first substrate. In the present invention, the "refractive index of the optical transmission unit" means the refractive index of the transmission path of light transmitted by the optical transmission unit. In an example case where the optical transmission unit is the optical fiber, the refractive index of the optical transmission unit means the refractive index of a core of the optical fiber.

For example, in the mode of the display apparatus in which the optical transmission unit is disposed between the second display unit and the opposite surface of the first substrate to the first luminescent layer, light emitted from the first luminescent layer is transmitted to the second display unit through the first substrate. In such a case, equality in refractive index between the first substrate and the optical transmission unit makes it possible to reduce or prevent reflection of light on a boundary surface between the first substrate and the optical transmission unit.

Accordingly, it becomes possible to reduce or prevent effectively variation in brightness, luminosity and amount of light of the image, caused by the reflection of light. It is therefore possible for an observer to recognize visually the image displayed on the first display unit, which is formed by the light emitted from the first luminescent layer, in a state in which the brightness, luminosity and amount of light are kept as they are.

In the present invention, the term "the same refractive index" not only means literally equality of values of the refractive index, but also includes a certain relationship in refractive index between the optical transmission unit and the first substrate, which enables an observer to recognize visually the three-dimensional image. More specifically, approximation of the refractive index within a predetermined range causes the light reflection on the boundary surface between the optical transmission unit and the first substrate to a negligible extent that any serious problems in enabling an observer to recognize visually the appropriate image do not occur. It is therefore possible for the observer to recognize visually the three-dimensional image.

In the mode of the display apparatus in which the display unit comprises the substrate and the luminescent layer as described above, the optical transmission unit may have the same refractive index as that of the second substrate.

Such a structure makes it possible to prevent effectively reflection of light, which may be caused by difference between the refractive index of the optical transmission unit and the refractive index of the second substrate. It is therefore possible for an observer to recognize visually the light as emitted from the display unit.

For example, in the mode of the display apparatus in which the optical transmission unit is disposed between the first display unit and the opposite surface of the second substrate to the second luminescent layer, light emitted from the first luminescent layer is transmitted to the second substrate through the optical transmission unit. In such a case, equality in refractive index between the second substrate and the optical transmission unit makes it possible to reduce or prevent reflection of light on a boundary surface between the second substrate and the optical transmission unit.

In addition, equality in refractive index between the first substrate and the optical transmission unit makes it possible to reduce or prevent reflection of light on the boundary surface between the first substrate and the optical transmission unit as mentioned above.

Accordingly, it becomes possible to reduce or prevent effectively variation in brightness, luminosity and amount of light of the image, caused by the reflection of light. It is therefore possible for an observer to recognize visually the image displayed on the first display unit, which is formed by the light emitted from the first luminescent layer, in a state in which the brightness, luminosity and amount of light are kept as they are.

In another mode of the embodiment according to the display apparatus of the present invention, the optical transmission unit may be provided so as to correspond to respective pixels of the first display unit and the second display unit.

In such a mode, it is possible for an observer to recognize visually the light emitted from the respective pixels of the first display unit and the light emitted from the corresponding pixels of the second display unit in an appropriately superimposed state through the optical transmission unit provided for each of the pixels on his/her line of sight. Accordingly, the observer can recognize visually the images, which are appropriately superimposed on each other in each pixel, thus providing the observer with the three-dimensional image in an appropriate manner.

In another mode of the embodiment according to the display apparatus of the present invention, the first display unit may have a first pixel block comprising a plurality of pixels and the second display unit has a second pixel block comprising a plurality of pixels, the first pixel block corresponding to the second pixel block; and the optical transmission unit may be provided so as to correspond to each of the first pixel block and the second pixel block.

Such a mode enables the structure of the optical transmission unit to be more simplified, in comparison with a case where the optical transmission unit is provided for each of the pixels, thus providing advantageous effects.

In addition, it is possible for an observer to recognize visually the image displayed on the first display unit and the image displayed on the second display unit in an appropriately superimposed state on his/her line of sight.

In another mode of the embodiment according to the display apparatus of the present invention, the optical transmission unit may comprise optical fibers.

In such a mode, it is possible to transmit light emitted from the first display unit to the second display unit in a relatively easy manner through the optical fibers, which are widely available or can be manufactured easily. Accordingly, the display apparatus according to the present invention can be manufactured relatively easily at a reduced cost, thus providing advantageous effects.

Quarts optical fiber, fiber formed of the other material or plastic-clad optical fiber may be used as the optical fiber. The other optical fiber than those as described above may be used. A suitable optical fiber may be properly selected from the optical fibers, which are relatively available or can be handled easily, in accordance with the applied mode of the embodiment according to the display apparatus of the present invention.

In the mode of the display apparatus in which the optical transmission unit comprises the optical fibers, each of the optical fibers may have a core, which has a smaller size than each of the pixels of the first display unit.

Such a structure enables light emitted from the pixels of the first display unit to be transmitted appropriately to the second display unit through a bundle of optical fibers. More specifically, placing the optical fibers between the first display unit and the second display unit without forming any void therebetween enables light emitted from the pixels to be transmitted completely to the corresponding pixels. This eliminates the need for providing the optical fibers so as to correspond to the respective pixels, thus making it possible to simplify the manufacturing process of the display apparatus according to the embodiment of the present invention. In addition, the structure of the display apparatus according to the embodiment of the present invention can also be simplified.

In the mode of the display apparatus in which the optical transmission unit comprises the optical fibers, each of the pixels of the first display unit may have the same shape as the core.

Such a structure enables the pixel of the first display unit and the corresponding pixel of the second display unit to be connected appropriately to each other through the optical fiber, which is provided with the core having the same shape as the pixel. It is therefore possible to cause light emitted from the pixel of the first display unit to be transmitted within the core of the optical fiber, without causing occurrence of leak of light so as to superimpose such light on the other light emitted from the pixel of the second display unit on an observer's line of sight. The light emitted from the pixel can therefore be transmitted to the corresponding pixel without causing transmission loss of light. In addition, the images can be displayed in an appropriately superimposed state on the observer's line of sight.

In case where the first display unit is for example an organic EL display device, a pixel is an organic EL luminescent layer described later. In this case, the organic EL luminescent layer has for example a circular shape so as to be fitted to the shape of the core of the optical fiber. The above-mentioned circular shape is different from a rectangular shape widely applied to the conventional organic EL display device. Such a structure enables the light emitted from the first luminescent layer to enter appropriately the core of the optical fiber, without causing occurrence of leak of light. The light as emitted can be utilized effectively in this manner.

In the mode of the display apparatus in which the optical transmission unit comprises the optical fibers, the optical fibers may be connected to at least one of the first display unit and the second display unit by an optical adhesive having a light transmission property.

Such a structure enables the optical fibers and the display unit to be connected in a relatively easy manner. Accordingly, the manufacturing costs can be decreased and the number of manufacturing steps can be reduced in the manufacture of the display apparatus according to the embodiment of the present invention, so as to be adapted to mass production of the display apparatus, thus causing great advantageous effects in practice.

An epoxy resin optical adhesive or an acrylate resin adhesive may be used as the optical adhesive. The optical adhesive is not limited only to them, and may be any suitable adhesive having a light transmission property, through which the optical fiber and the display unit can be connected to each other. A suitable optical adhesive may be properly selected from the optical adhesives, which are relatively available or can be handled easily, in accordance with the applied mode of the embodiment according to the display apparatus of the present invention.

In the mode of the display apparatus in which the optical fiber and the display unit are connected to each other through the optical adhesive as described above, the optical adhesive may have the same refractive index as that of the core.

Such a structure makes it possible to reduce or prevent reflection of light emitted from the first display unit on a boundary surface between the optical adhesive and the optical fiber.

In the mode in which the optical transmission unit is disposed between the first substrate and the second substrate, equality in refractive index among the first substrate, the second substrate, the core of the optical fiber and the optical adhesive makes it possible to reduce or prevent reflection of light on the respective boundary surfaces among the first substrate, the second substrate, the core of the optical fiber and the optical adhesive. In the present invention, the term "the same refractive index" not only means literally equality of values of the refractive index, but also includes a certain relationship in refractive index between the optical adhesive and the optical fiber, which permits prevention of reflection of light on the boundary surface between the optical adhesive and the optical fiber. A uniform refractive index of the light path in which the light emitted from the first display unit is transmitted to the second display unit, makes it possible to reduce or prevent reflection of light due to variation of the refractive index in the middle of the light path.

It is therefore possible for an observer to recognize visually the image displayed on the first display unit in a state in which the original brightness, luminosity and amount of light for the image are kept as they are.

In another mode of the embodiment according to the display apparatus of the present invention, at least one of the first substrate and the second substrate may contain at least one of glass and plastic.

In such a mode, at least one of the first substrate and the second substrate contains at least one of glass and plastic, thus enabling the substrate having the light transmission property to be used relatively easily.

In addition, forming the substrate of a composite of glass and plastic and adjusting the mixing ratio thereof in a desired manner make it possible to set the refractive index of the substrate to the desired value. It is therefore possible to adjust relatively easily the refractive indexes of the first substrate and the second substrate to the desired values so that the refractive indexes of the first and second substrates and the optical transmission unit satisfy the above-mentioned relationship.

In another mode of the embodiment according to the display apparatus of the present invention, the second display unit may comprise an organic electroluminescence display device.

In such a mode, the three-dimensional display can be achieved with the use of a semi-transparent panel type display unit, which is composed of the organic EL display device.

The organic EL display device may be a bottom emission type, a top emission type or a transparent type. Here, the "bottom emission type" device is an organic EL display device in which light emitted for example from an organic EL luminescent layer described later is transmitted for example to an ITO electrode side described later (i.e., the substrate side). The "top emission type" device is an organic EL display device in which light emitted for example from the organic EL luminescent layer described later is transmitted to a cathode side described later (i.e., the opposite side to the substrate). The "transparent type" device is an organic EL display device in which light emitted for example from the organic EL luminescent layer described later is transmitted to both of the cathode side described later and the ITO electrode side. The organic EL display device may be an active matrix drive type or a passive matrix drive type.

Use of any type of the organic EL display device can provide the same effects as the embodiment according to the display apparatus of the present invention.

The first display unit may be a semi-transparent display unit, or an opaque display unit such as a cathode ray tube, a liquid crystal display, a field emission display or a plasma display since the first display unit does not need to be light-transmissible.

In the mode in which the second display unit comprises the organic EL display device, the second substrate may comprise a polymer film.

In such a structure, use of the second substrate, which includes a polymer film containing for example polycarbonate or polyethylene terephthalate can provide the sheet type second display unit, which is freely bendable and flexible.

This enables the display apparatus to be further downsized, thus providing a suitable display apparatus for a cellular phone or a PDA (Personal Digital Assistance) in which miniaturization or portability is required.

In addition, using the organic EL display device, which is provided with the first substrate including a polymer film, for the first display unit, can achieve the display apparatus for three-dimensional display, which is freely bendable and flexible. The display apparatus having the excellent portability can therefore be provided.

According to the embodiments of the display apparatus of the present invention, the apparatus comprises the first display unit, the second display unit and the optical transmission unit. It is therefore possible for an observer to recognize visually the image displayed on the second display unit, without variation in brightness, luminosity and amount of the original light for the image. In addition, the images displayed on the respective first and second display units can be superimposed appropriately on each other to be displayed on the observer's line of sight. As a result, the observer can recognize visually the three-dimensional image in a more appropriate manner. According to the first and second embodiments according to the display apparatus of the present invention, the same effects can be provided also in the display of moving images and static images, and more specifically, the observer can recognize visually the three-dimensional image.

The operations and other advantages of the present invention will become more apparent from the following examples.

### EXAMPLES

With reference now to the attached drawings, examples of the display apparatus according to the present invention will be described below.

### [Fundamental structure of the display apparatus]

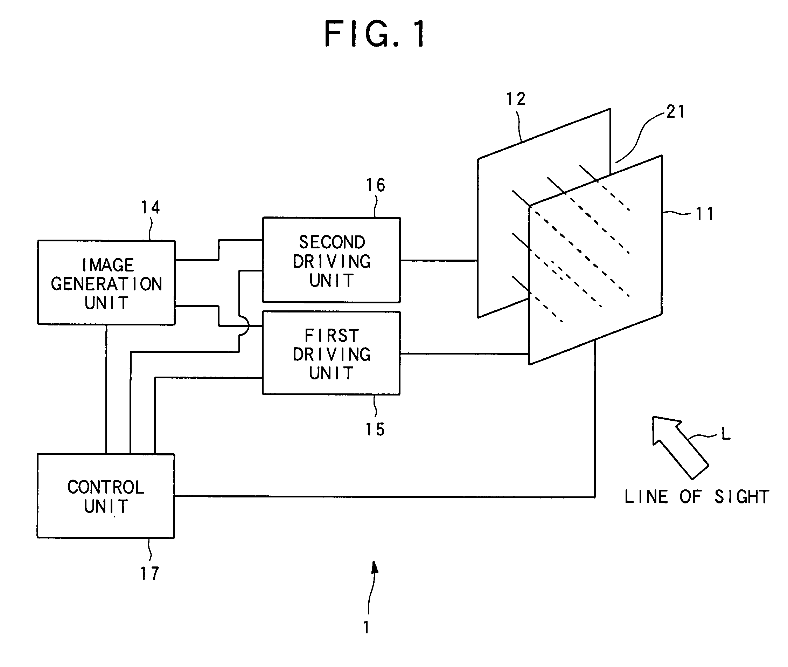

Description will be given below of the fundamental structure of the display apparatus according to the example of the present invention with reference to FIG. 1. FIG. 1 is a block diagram showing the structure of the display apparatus 1 according to the example of the present invention

The display apparatus 1 includes a front screen 11; a rear screen 12 disposed behind the front screen 11; an image generation unit 14 for generating images to be displayed on the front screen 11 and the rear screen 12; the first driving unit 15 for supplying an image signal from the image generation unit 14 to the front screen 11 to display an image thereon; the second driving unit 16 for supplying an image signal from the image generation unit 14 to the rear screen 12 to display an image thereon; a plurality of optical fibers 21, which serves as an example of the "optical transmission unit" of the present invention, for transmitting light emitted from the rear screen 12 to the front screen 11; and a control unit 17 for controlling entirely the display apparatus 1, as shown in FIG. 1.

The front screen 11 and the rear screen 12, which form an image display component of the display apparatus 1, are placed so as to be apart from each other by a predetermined distance on a line of sight of an observer. The front screen 11 is composed of a luminescent layer 111 and a substrate 112, and the rear screen 12 is composed of a luminescent layer 121 and a substrate 122. The luminescent layers 111, 121 actually emit light to display images. The substrates 112, 122, which contain glass or plastic component, protect and hold the luminescent layers 111, 121. At least one of the substrates 111, 121 may a function of lens, or a function of transformation for various kinds of images, such as a color transformation function.

The front screen 11 is disposed on the front side and the rear screen 12 is disposed on the rear side. A display device having a light transmission property, such as an electroluminescent display device is used as the front screen 11, in order to make it possible for an observer to recognize the image displayed on the rear screen 12 through the front screen 11. On the other hand, the rear screen 12 may be such a liquid crystal display device or electroluminescent display device, or a CRT (cathode ray tube) display device, a plasma display device or an FED (field electron emission) display device, in view of the fact that the rear screen 12 is not required to be light-transmissible.

Displaying the images on the respective front and rear screens enables the observer to recognize visually a three-dimensional image, although discrete. Alternatively, adjusting brightness of the images causes the three-dimensional image to be displayed so as to enable the observer to recognize visually as if the three-dimensional image is located between the front screen 11 and the rear screen 12. Accordingly, a brightness modulation type three-dimensional display is also available.

The image generation unit 14 generates the image to be displayed on the front screen 11 and the rear screen 12 and stores such an image. Alternatively, any image, which has externally been inputted, for example, an image, which has been formed by a personal computer, may be stored in a predetermined storing area so that image data can be read out, as an occasion demands. The images as a unit are controlled independently of one another and can be processed to display them independently. An independent control can be made not only on which screen 11 or 12 the image is to be displayed, but also in a position, intensity (i.e., brightness), luminous intensity (i.e., chromaticity), hue, mode and change in image of the display.

The first driving unit 15 and the second driving unit 16, which serve as a driver for the display on the respective front and rear screens 11, 12, supplies the image signals, which have been generated by the image generation unit 14, to the respective front and rear screens 11, 12 to display the images thereon. The first and second driving units 15, 16 may have a function of carrying out a decorative and effective display driving with a display timing or flashing.

The control unit 17 controls entirely the display apparatus 1. With respect to the display of three-dimensional image, the control unit 17 sets the display modes of the front and rear screens 11, 12, for example, brightness and intensity of the screen section, and causes the image generation unit 14 to generate the image signals to be displayed on the respective front and rear screens 11, 12. In addition, the control unit 17 controls operation of the first driving unit 15 and the second driving unit 16.

In the embodiment of the present invention, the optical fibers 21 transmit light emitted from the luminescent layer 121 of the rear screen 12 so as to be recognized visually by an observer through the luminescent layer 111 of the front screen 11. Quarts optical fiber, fiber formed of the other material or plastic-clad optical fiber may be used as the optical fiber 21.

Each of the optical fiber 21 has a core and a cladding portion, which will be described later. Difference in refractive index between the core and the cladding portion (more specifically, the core has a smaller refractive index than the cladding portion) causes light incident on the core to be reflected on a boundary surface between the core and the cladding portion, thus providing an appropriate transmission in the core. It is preferable that the core has the same refractive index as that of the substrates 112, 122.

The display apparatus according to the example of the present invention, which is suitable for the three-dimensional display, can be achieve utilizing the above-mentioned optical fibers 21 as described later.

### [Principle of operation of the display apparatus]

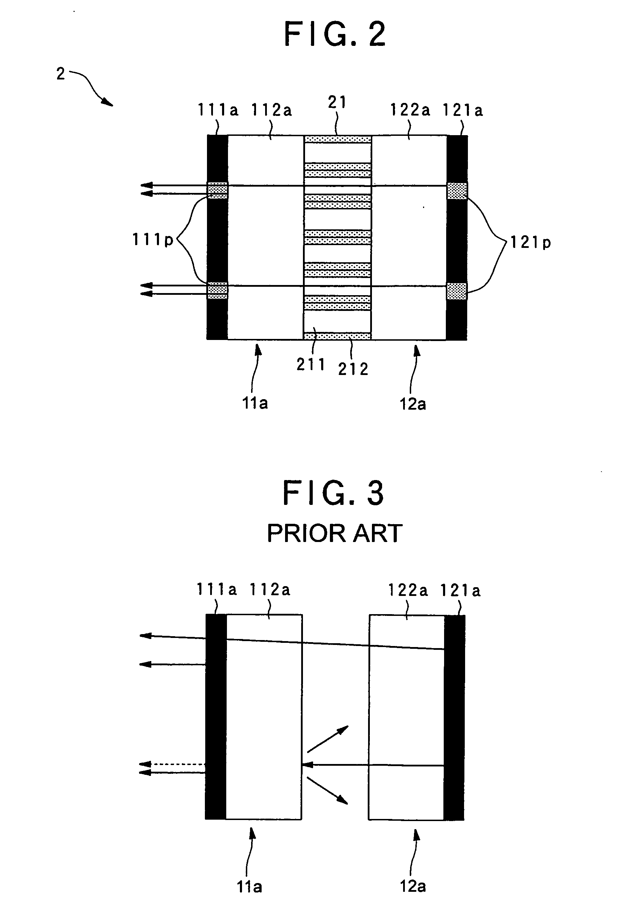

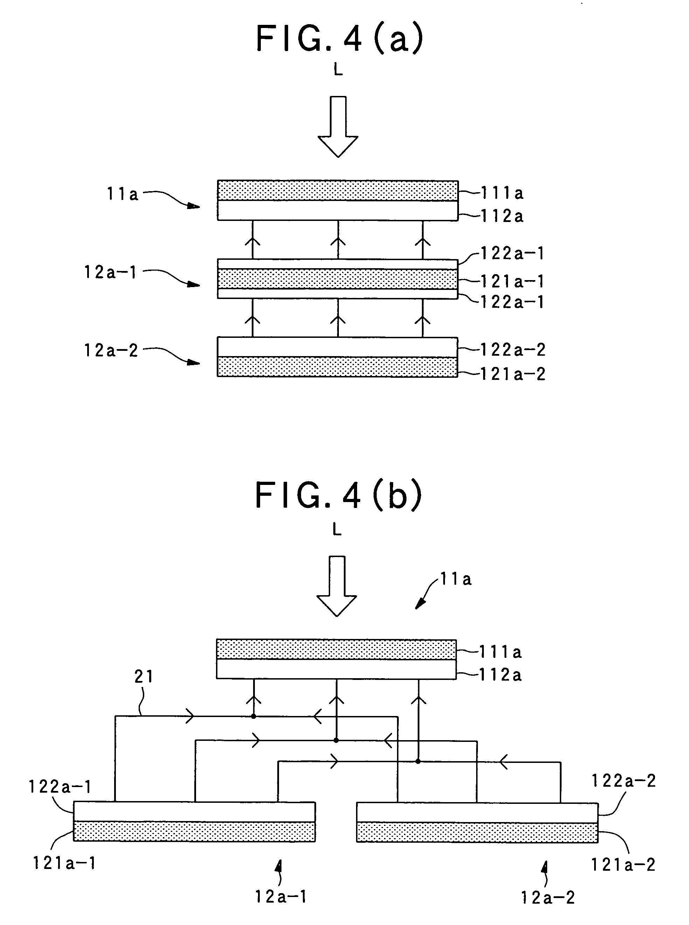

Now, description will be given below of a principle of operation of the display apparatus 1 according to the first example of the present invention with reference to FIGS. 2 to 4(b). FIG. 2 illustrates a diagrammatical cross section of the light transmission path in the display apparatus according to the example of the present invention; FIG. 3 illustrates a diagrammatical cross section of the comparative example to the display apparatus of the present invention; FIG. 4(a) illustrates a diagrammatical cross section of another structure of the display apparatus of the present invention; and FIG. 4(b) illustrates a diagrammatical cross section of further another structure of the display apparatus of the present invention. In the description referring to FIGS. 2 to 4(b), the organic EL display device is used as an example of the front and rear screens 11, 12. Only the front screen 11, the rear screen 12 and the optical fibers 21, which are extracted from the structural components as shown in FIG. 1, will be described in detail below.

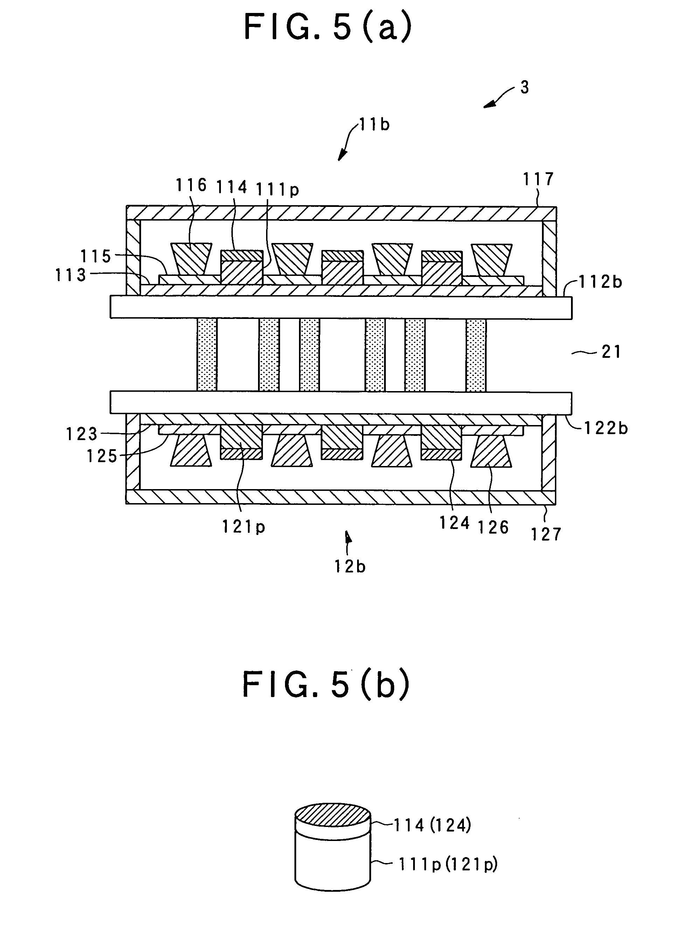

The display apparatus 2 according to the example of the present invention has the structure as shown in FIG. 2. The transparent type organic display device, which is composed of the luminescent layer 111a and the substrate 112a and has the light-transmission property, is used as the front screen 11a. The bottom emission type organic EL display device, which is composed of the luminescent layer 121a and the substrate 122a and has no light-transmission property, is used as the rear screen 12a. The luminescent layer 111a includes a plurality of pixels (i.e., organic EL luminescent layer sections) 111p. The luminescent layer 121a also includes a plurality of pixels (i.e., organic EL luminescent layer sections) 121p. The rear screen 12a having no light-transmission property is provided for example with metallic electrodes (see FIG. 5(a)), which permits to reflect light emitted from the respective pixels 121p of the luminescent layer 121a to the side of an observer. The organic EL display device applied as the front and rear screens 11, 12 may be an active matrix drive type or a passive matrix drive type.

The substrate 112a of the front screen 11 a and the substrate 122a of the rear screen 12a are connected to each other through the optical fibers 21. The opposite ends of each of the optical fibers 21 are secured to the respective substrates 112a, 122a through the optical adhesive, which contains for example an epoxy resin or an acrylate resin. It is preferable that the optical adhesive has the same refractive index as the substrates 112a, 122a. The light emitted from the single pixel 121p of the luminescent layer 121a of the rear screen 12a is transmitted through the core 211 serving as the light path to the front screen 11a, while reflecting repeatedly on the boundary surface between the core 211 and the cladding portion 212. It is preferable that the core portion 211 has the same refractive index as the substrates 112a, 122a.

As a result, the light emitted from the single pixel 121p of the luminescent layer 121a of the rear screen 12a is transmitted appropriately to the corresponding single pixel 111p of the front screen 11a. It is therefore possible to superimpose the image, which is formed of the light emitted from the pixel 121p and displayed on the rear screen 12a, on the other image, which is formed of the light emitted form the pixel 111p and displayed on the front screen 11a, on an observer's line of sight. Consequently, the three-dimensional display can be achieved appropriately in accordance with the various display system such as the brightness modulation type three-dimensional display system.

Equality in refractive index among the core 211 of the optical fiber, the substrate 112a and the optical adhesive makes it possible to prevent reflection of light on the boundary surface among them. It is therefore possible to avoid attenuation of light, thus enabling an observer to recognize visually the image in a state in which the original brightness, luminosity and amount of light for the image are kept as they are.

Now, the comparative example to the display apparatus 2 according to the example of the present invention will be described below. In the comparative example, the front screen 11a and the rear screen 12a are placed so as to be apart from each other, without providing any optical fibers between them (more specifically, the front and rear screens 11a, 12a are isolated from each other by air), in a different manner from the present invention. In such a case, light emitted from the pixel of the luminescent layer 121a of the rear screen 12a propagates through the air to the substrate 112a of the front screen 11a. However, the light emitted from the pixel of the luminescent layer 121a of the rear screen 12a may be reflected, refracted or dispersed in the air due to various factors such as a water content in the air or a temperature thereof, thus making it impossible to carry out a proper transmission to a proper pixel of the luminescent layer 111a of the front screen 11a, which corresponds to the above-mentioned pixel of the luminescent layer 121a of the rear screen 12a. Alternatively, the light emitted from the pixel of the luminescent layer 121a of the rear screen 12a may not travel in a straight line in a proper direction, thus leading to failure of the transmission to the proper pixel of the luminescent layer 111a of the front screen 11a, which corresponds to the above-mentioned pixel of the luminescent layer 121a of the rear screen 12a.

In addition, in the comparative example, the air existing between the front and rear screens 11a, 12a has a smaller refractive index than the substrate 112a containing the glass. As a result, at least part of the light launched into the substrate 112a is reflected on the boundary surface between the substrate 112a and the air and only the remaining of the light propagates through the substrate 112a so as to be recognized visually by an observer. Therefore, the light emitted from the luminescent layer 121a is transmitted to the front screen 11a with variation in brightness, luminosity and amount of light, and then recognized visually by the observer in such a state, which is different from the original emission state. Such a comparative example disables the observer from recognizing visually the images displayed on the front and rear screens 11a, 12a in an appropriately superimposed state on his/her line of sight in an appropriately adjusted brightness, thus leading to difficulty in visual recognition of the three-dimensional image.

However, according to the display apparatus 2 of the example of the present invention as shown in FIG. 2, it is possible to solve the technical problem, involved in the above-described display apparatus of the comparative example, that the light emitted from the pixel of the luminescent layer 121a of the rear screen 12a may not be transmitted, in an appropriate manner, to the proper pixel of the luminescent layer 111a of the front screen 11a, which corresponds to the above-mentioned pixel of the luminescent layer 121a of the rear screen 12a. More specifically it is possible to transmit the light emitted from the pixel 121p of the rear screen 12a to the corresponding pixel 111p of the front screen 11a through the optical fiber 21. In addition, according to the display apparatus 2 of the example of the present invention as shown in FIG. 2, it is also possible to solve the technical problem of reflection of light on the surface of the substrate. It is therefore possible for an observer to recognize visually the images displayed on the respective first and second screens 11a, 12a in an appropriately superimposed state on his/her line of sight in an appropriately adjusted brightness, thus providing a proper visual recognition of the three-dimensional image.

According to the display apparatus 2 of the example of the present invention, it is possible to transmit the lights emitted from the front and rear screens 11a, 12a in an appropriately superimposed state in each pixel on an observer's line of sight through the optical fibers 21. In addition, prevention of light reflection on the surface of the substrate makes it possible for the observer to recognize visually the image displayed on the rear screen 12a without variation in image characteristics such as brightness, luminosity and amount of light. It is therefore possible for the observer to recognize visually the images displayed on the front and rear screens 11a, 12a in an appropriately superimposed state (namely, in a state in which the original brightness, luminosity and amount of light for the image are kept as they are) on his/her line of sight in an appropriately adjusted brightness. As a result, the observer can recognize visually the three-dimensional image in a more appropriate manner. According to the display apparatus 2 of the example of the present invention, the display apparatus for displaying the three-dimensional image can be achieved, thus providing excellent technical effects.

In case where three display units, i.e., the front screen 11a, the rear screen 12a-1 and the additional rear screen 12a-2 are used as shown in FIGS. 4(a) and 4(b), the same technical effects as those in the display apparatus according to the above-described example of the present invention.

More specifically, in case where the three display units are place in tandem on an observer's line of sight as shown in FIG. 4(a), the organic EL display device may be used as the front screen 11a and the bottom emission type organic EL display device may be used as the additional rear screen 12a-2 in the same manner as the above-described example of the present invention. Here, the rear screen 12a-1 is required to permit light emitted from the additional rear screen 12a-2 to be transmitted through the rear screen 12a-1. Accordingly, the rear screen 12a-1 is required to be light-transmissible. It is necessary to use for example the transparent type organic EL display device as the rear screen 12a-1. In this case, the rear screen 12a-1 may be composed of a pair of substrates and a luminescent layer held between these substrates as shown in FIG. 4. These substrate have the same function as a transparent sealing film described later, thus enabling even the display apparatus as shown in FIG. 4(a) to provide the same technical effects as the above-described display apparatus 1, 2 according to the example of the present invention.

Alternatively, the characteristic properties of the optical fibers 21 enables achievement of a different structure in which the transparent type organic EL display device is used only as the front screen 11 a, and the opaque type organic EL display device is used as the both of the rear screen 12a-1 and the additional rear screen 12a-2. In this case, the optical fibers 21 are provided in such an appropriate manner that lights emitted from the pixel of the rear screen 12a-1 and the pixel of the additional rear screen 12a-2 are transmitted to the corresponding pixel of the front screen 11a.

In the display apparatus according to the example of the present invention, which is provided with four or more display units, designing the apparatus in the similar manner to that as shown in FIGS. 4(a) and 4(b) can provide the same technical effects as the above-described display apparatus 1, 2 according to the example of the present invention. [Concrete example of the display apparatus]

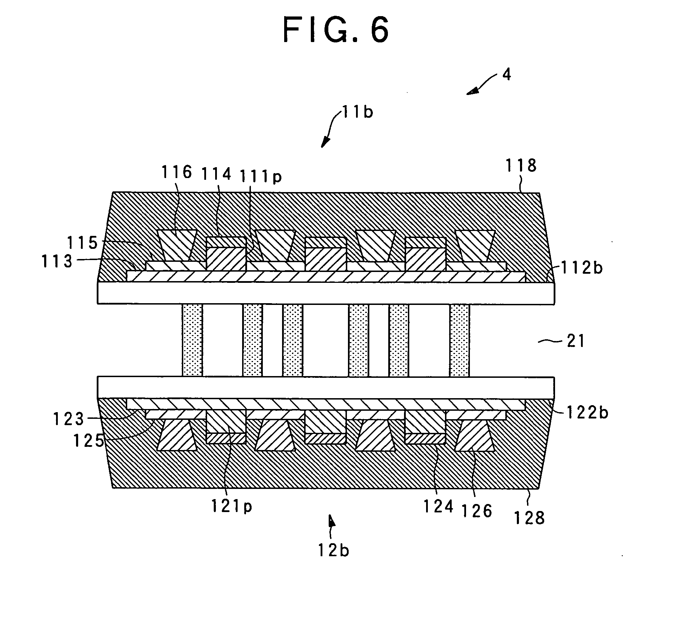

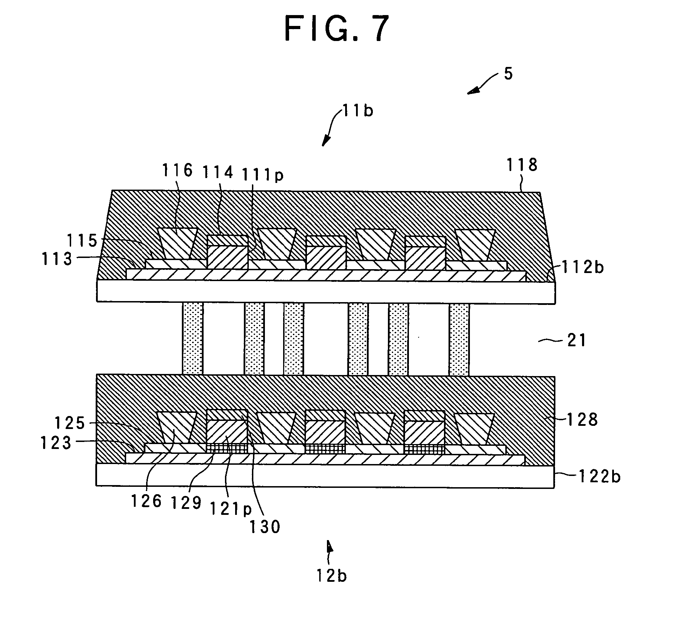

Now, description will be given below of the concrete example of the apparatus according to the example of the present invention with reference to FIGS. 5(a) to 7. FIG. 5(a) is a diagrammatic view illustrating the concrete example of the display apparatus, in which the organic EL display device is protected by a transparent glass sealing cover; FIG. 5(b) is a diagrammatic view illustrating the shape of the organic EL luminescent layer; FIG. 6 is a diagrammatic view illustrating the concrete example of the display apparatus, in which the organic EL display device is protected by a transparent sealing film, which is substituted by the above-mentioned transparent glass sealing cover; and FIG. 7 is a diagrammatic view illustrating the concrete example of the display apparatus, in which the top emission type organic EL display device is used. Only the front screen 11, the rear screen 12 and the optical fibers 21, which are extracted from the structural components as shown in FIG. 1, will be described in detail below.

The display apparatus 3 according to the example of the present invention has the structure as shown in FIG. 5(a). More specifically, the front screen 11b includes organic EL luminescent layer sections 111p, a substrate 112b, an ITO (indium tin oxide) electrode (i.e., anode) 113, transparent electrode (cathode) sections 114, an insulating film 115, cathode partition sections 116 and a transparent glass sealing cover 117. On the other hand, the rear screen 12b includes organic EL luminescent layer sections 121p, a substrate 122b, an ITO electrode (i.e., cathode) 123, metallic electrode (cathode) sections 124, an insulating film 125, cathode partition sections 126 and a transparent glass sealing cover 127.

Each of the organic EL luminescent layer sections 111p (121p) includes a hole injection layer, a hole transporting layer, a luminescent layer, an electron transport layer and an electron injection layer, any one of which is not shown. The hole injection layer is formed for example of CuPc (copper phthalocyanine). The hole transporting layer is formed for example of NPB (N, N-di(naphthalene-1-yl)-N, N-diphenyl-benzidene). The luminescent layer is formed for example of Alq₃ (tris(8-hydroxyquinoline)aluminum). The electron transport layer is formed for example of BCP (bathocuproine). The electron injection layer is formed for example of LiF (lithium fluoride). Each of the above-mentioned organic EL luminescent layer sections 111p (121p) forms a single pixel of the front screen 11a or 12b. Each of the organic EL luminescent layer sections 111p (121p) may have the same size.

Each of the organic EL luminescent layer sections 111p (121p) is formed into a cylindrical shape corresponding to the shape of the cross-sectional shape of the optical fiber 21. It is therefore possible to transmit the light, which is emitted from the organic EL luminescent layer section 111p, and the light, which is emitted from the pixel (i.e., the organic EL luminescent layer section 121p) corresponding to the above-mentioned organic EL luminescent layer section 111p, in an appropriately superimposed state, without causing occurrence of leak of light. A proper transmission of the light can be achieved, even when the shape of the end portion of the organic EL luminescent layer sections 111p, 121p is not identical to the cross section of the core of the optical fiber 21. The transparent electrode section 114 (124) may have a circular shape as shown in FIG. 5(b) or another shape.

Returning to FIG. 5(a), the substrate 112b (122b) not only holds the organic EL luminescent layer sections 111p (121p)) thereon, but also protects them. A glass plate is used as the substrate 112b (122b). A polymer film may be used as the substrate 112b (122b). It is preferable that the substrate 112b has the same refractive index as the substrate 122b. It is however possible to cause the three-dimensional image at a certain permissible level, even when the substrates 112b, 122b are identical to each other in refractive index. In addition, it is preferable that both the substrates 112b, 122b have the same refractive index as the core portion 211 of the optical fiber 21.

The ITO electrode 113 (123) is the anode having the light-transmission property. An IZO (indium zinc oxide) electrode may be used in place of the ITO electrode as the anode. In the display apparatus 3 as shown in FIGS. 5(a) and 5(b), it is preferable that the ITO electrode 113 has the same refractive index as the substrate 112b and the ITO electrode 123 has the same refractive index as the substrate 122b.

Each of the transparent electrode sections 114 is the cathode, which contains for example the IZO (indium zinc oxide) and has the light-transmission property. Alternatively, the transparent electrode section 114 may be an electrode section containing for example the IZO (indium zinc oxide) or a metallic electrode section having the thin film shape.

Each of the metallic electrode sections 124, which is formed of aluminum, causes the light emitted from the organic EL luminescent layer section 121p to be reflected to the side of the substrate 122b.

The insulating film 115 (125), which is formed for example of polyimide in order to avoid leak of current, is provided on the substrate 112b (122b) at the other positions than those where the organic EL luminescent layer sections 111b (121p) are formed.

The cathode partition sections 116 (126) are formed on the insulating film 115 (125) at the other positions than those where the cathode sections are formed, by carrying out a patterning process to obtain a desired pattern during the formation of the cathode sections (i.e., the metallic electrode sections 124 or the transparent electrode sections 114).

The transparent glass sealing cover 117 (127) protects the above-described structural components from the external influence. The transparent glass sealing cover may be substituted by a transparent sealing film described later.

The front screen 11b and the rear screen 12b are placed apart from each other and the optical fibers 21 connect them to each other. In this case, it is preferable that each optical fiber 21 is placed so that each organic EL luminescent layer section 111p of the front screen 11b corresponds to each organic EL luminescent layer section 121p of the rear screen 12b. More specifically, the optical fibers 21 are provided for the respective pixels (i.e., the organic EL luminescent layer sections 111p and the organic EL luminescent layer sections 121p) of the front and rear screens 11b, 12b with the use for example of an optical microscope. The opposite ends of each of the optical fibers 21 are secured to the substrates 112b, 122b for example by the optical adhesive. Alternatively, there may be adopted a structure in which the organic EL luminescent layer sections are grouped into a plurality of pixel blocks and the optical fibers 21 are used for the respective pixel blocks.

In the above-described structure, the light emitted from the organic EL luminescent layer section 121p of the rear screen 12b is transmitted through the optical fiber 21 to the corresponding organic EL luminescent layer section 111p of the front screen section 11b. More specifically, the light emitted from the organic EL luminescent layer section 121p is superimposed appropriately on the light emitted from the corresponding organic EL luminescent layer section 111p, without being transmitted to the other portion than the corresponding organic EL luminescent layer section 111p, so as to be recognized visually by an observer.

No existence of air in the light transmission path prevents the light emitted from the organic EL luminescent layer section 121p from being reflected on the substrate 112b.

According to the display apparatus 3 of the example of the present invention, it is possible for an observer to recognize visually the images displayed on the front and rear screens 11a, 12a in an appropriately superimposed state in each pixel on his/her line of sight in an appropriately adjusted brightness.

Alternatively, each of the front and rear screens 11b, 12b may have a structure in which a transparent sealing film 118 (128) that is substituted for the glass sealing cover 117 (127) as shown in FIG. 5(a) covers the front screen 11b (the rear screen 12b) to protect it. In the display apparatus 4 according to the example of the present invention as shown in FIG. 6, use of the transparent sealing film 118 (128) makes it possible to reduce the thickness of the front and rear screens 11b (12b) in comparison with the case utilizing the glass sealing cover 117 (127), thus providing an excellent property.

In FIGS. 5(a), 5(b) and 6, the front screen 11b utilizes the transparent type organic EL luminescent display device and the rear screen 12b utilizes the bottom emission type organic EL luminescent display device. The present invention is not limited only to such a system.

Utilizing the top emission type organic EL display device in the rear screen 12b as in the display apparatus 5 as shown in FIG. 7 can also provide the same effects as the display apparatus according to the above-described examples. In this case, the rear screen 12b is provide with reflectors 129, which are formed for example of metallic panel so as to be disposed between the organic EL luminescent layer section 121p and the ITO electrode 123. The IZO (indium zinc oxide) electrode is used for the cathode 130 of the rear screen 12b, which is required to be light transmissible. In this case, the light emitted from the organic EL luminescent layer section 121p of the rear screen 12b is superimposed on the light emitted from the organic EL luminescent layer section 111p of the front screen 11b through the transparent sealing film 128, the optical fibers 21 (i.e., the core portions 211) and the substrate 112b, so as to be recognized visually by an observer. Equality in refractive index among the transparent sealing film 128, the substrate 112b and the core portion 211 of the optical fiber 21 make is possible to provide the same technical effects as the display apparatus 1, 2, 3 and 4 according to the example of the present invention.

It is therefore possible to cause an observer to recognize visually the image without variation in image characteristics such as brightness, luminosity and amount of light, even when any type of organic EL display device is utilized.

In addition, substituting a flexible polymer film for the substrate 112b or 122b in the above-described organic EL display device, so as to place the above-mentioned organic EL luminescent layer sections 111p or 121p and the relevant components on the polymer film can provide the display apparatus having flexibility.

In the above-described examples of the present invention, the organic EL display device is utilized for the example of the "display unit" of the present invention. The present invention is not limited only to such examples. Use of the other type of display device having the light-transmission property than the organic EL display device can provide the same technical effects.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An apparatus for displaying a three-dimensional image of an object to be displayed, through a superimposing of a plurality of images of said object, which are placed so as to be apart from each other on a line of sight of an observer, **characterized by** comprising:
a first display unit (12, 12a, 12b) having a first screen;
a second display unit (11, 11 a, 11b) disposed so as to face said first display unit (12, 12a, 12b), said second display unit (11, 11a, 11b) having a second screen, which is light-transmissible; and
an optical transmission unit (21) disposed between said first display unit (12, 12a, 12b) and said second display unit (11, 11a, 11b), to transmit light, which is emitted from portions of said first screen, to respective portions of said second screen.

2. The apparatus as claimed in Claim 1, wherein:
said first display unit (12, 12a, 12b) comprises:
a first substrate (122a); and
a first luminescent layer (121a) formed on said first substrate (122a), said first luminescent layer emitting light so as to provide said first screen; and
said second display unit (11, 11a, 11b) comprises:
a second substrate (112a) having a light transmission property; and
a second luminescent layer (111a) formed on said second substrate (112a), said second luminescent layer emitting light so as to provide said second screen.

3. The apparatus as claimed in Claim 2, wherein:
said optical transmission unit (21) is disposed between said first display unit (12, 12a, 12b) and an opposite surface of said second substrate (112a) to said second luminescent layer (111a).

4. The apparatus as claimed in Claim 3, wherein:
said first substrate (122a) has a light transmission property; and
said optical transmission unit (21) is disposed between said second display (11, 11 a, 11b) unit and an opposite surface of said first substrate (122a) to said first luminescent layer (121a).

5. The apparatus as claimed in any one of Claims 2 to 4, wherein:
said optical transmission unit (21) has a same refractive index as that of said first substrate (122a).

6. The apparatus as claimed in any one of Claims 2 to 5, wherein:
said optical transmission unit (21) has a same refractive index as that of said second substrate (112a).

7. The apparatus as claimed in any one of Claims 1 to 6, wherein:
said optical transmission unit (21) is provided so as to correspond to respective pixels of said first display unit (12, 12a, 12b) and said second display unit (11, 11a, 11b).

8. The apparatus as claimed in any one of Claims 1 to 7, wherein:
said first display unit (12, 12a, 12b) has a first pixel block comprising a plurality of pixels and said second display unit (11, 11a, 11b) has a second pixel block comprising a plurality of pixels, said first pixel block corresponding to said second pixel block; and
said optical transmission unit (21) is provided so as to correspond to each of said first pixel block and said second pixel block.

9. The apparatus as claimed in any one of Claims 1 to 8, wherein:
said optical transmission unit (21) comprises optical fibers.

10. The apparatus as claimed in Claim 9, wherein:
each of said optical fibers has a core, said core having a smaller size than each of the pixels of said first display unit.

11. The apparatus as claimed in Claim 9, wherein:
each of the pixels of said first display unit has a same shape as said core.

12. The apparatus as claimed in any one of Claims 9 to 11, wherein:
said optical fibers are connected to at least one of said first display unit (12, 12a, 12b) and said second display unit (11, 11a, 11b) by an optical adhesive having a light transmission property.

13. The apparatus as claimed in Claim 12, wherein:
said optical adhesive has a same refractive index as that of said core.

14. The apparatus as claimed in any one of Claims 1 to 13, wherein:
at least one of said first substrate (122a) and said second substrate (112a) contains at least one of glass and plastic.

15. The apparatus as claimed in any one of Claims 1 to 14, wherein:
said second display unit (11, 11a, 11b) comprises an organic electroluminescence display device.

16. The apparatus as claimed in Claim 15, wherein:
said second substrate (112a) comprises a polymer film.
